(19) **Europäisches Patentamt European Patent Office Office européen des brevets**

(11) **EP 1 785 747 B1**

(12) **FASCICULE DE BREVET EUROPEEN**

(45) Date de publication et mention de la délivrance du brevet:
**28.02.2018 Bulletin 2018/09**

(51) Int Cl.:
*G02B 1/10* (2015.01)          *G02C 7/02* (2006.01)
*G02B 1/04* (2006.01)          *B29D 11/00* (2006.01)
*C08K 5/00* (2006.01)          *C08G 77/14* (2006.01)

(21) Numéro de dépôt: **06291624.2**

(22) Date de dépôt: **18.10.2006**

(54) **Lentille ophtalmique comportant un revêtement de protection contre la photodégradation et procédé pour preparer une telle lentille ophtalmique**

Haftschale, die eine Beschichtung zum Schutz vor Degradation durch Licht umfasst, und Verfahren zum Herstellen einer solchen Haftschale

Ophthalmic contact lens with a coating protecting it against photodegradation and preparation process for such a contact lens

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.11.2005 FR 0511513**
**14.11.2005 US 736473 P**

(43) Date de publication de la demande:
**16.05.2007 Bulletin 2007/20**

(73) Titulaire: **Essilor International**
**94220 Charenton-le-Pont (FR)**

(72) Inventeurs:
 • **Fanayar, Myriam,**
**Essilor International**
**94220 Charenton-Le-Pont (FR)**

 • **Lesartre, Noémie,**
**Essilor International**
**94220 Charenton-Le-Pont (FR)**

(74) Mandataire: **Cabinet Plasseraud**
**66, rue de la Chaussée d'Antin**
**75440 Paris Cedex 09 (FR)**

(56) Documents cités:
**EP-A- 0 453 149          EP-A- 1 593 990**
**WO-A-93/21010          WO-A-98/36006**
**US-A- 4 376 800          US-A- 5 531 940**
**US-A- 5 619 288          US-A- 6 099 123**
**US-A1- 2001 014 704          US-A1- 2003 027 960**
**US-A1- 2004 041 287          US-A1- 2005 107 537**
**US-A1- 2005 159 514**

**Description**

La présente invention concerne un article optique, en particulier une lentille ophtalmique, comportant un revêtement pour la protection contre la photodégradation. Plus particulièrement, ce revêtement permet de protéger la couche de matériau sous-jacente contre la photodégradation induite par les rayonnements ultraviolets. Ce revêtement est particulièrement adapté à être déposé sur une lentille optique, et plus spécifiquement une lentille ophtalmique comprenant au moins un revêtement sous-jacent comprenant une substance sensible à la photodégradation.

Le revêtement de protection contre la photodégradation utilisé dans la présente invention est particulièrement adapté à protéger une couche sous-jacente comprenant des colorants, plus particulièrement des colorants dichroïques sensibles à la photodégradation. D'une façon avantageuse, ce revêtement anti-UV sera lui-même revêtu d'un revêtement de protection contre la photo-oxydation par l'oxygène de l'air.

Une telle combinaison permet ainsi de protéger un revêtement comprenant des colorants sensibles, à la fois contre la photodégradation due aux UV et contre la photo-oxydation due à l'oxygène, sachant que d'un point de vue radicalaire ces deux types de dégradation peuvent se combiner ensemble pour accélérer la dégradation des colorants et notamment des colorants dichroïques. Le revêtement de protection contre la photodégradation est particulièrement adapté pour protéger des colorants présentant des fonctions chimiques sensibles aux ultraviolets, tels que par exemple des colorants dichroïques ou des colorants photochromiques.

La photodégradation des espèces chimiques n'a lieu que s'il y a absorption, par des parties réactives de l'espèce chimique, de radiations dans le domaine spectral comprenant le rayonnement UV lointain, le rayonnement UV et la lumière visible.

Les molécules excitées par absorption de l'énergie de rayonnement peuvent amorcer des réactions en chaînes, responsables du photovieillissement, à savoir des réarrangements intramoléculaires, des ruptures de chaînes ou des photoisomérisations. Ces réactions sont des désexcitations chimiques, mais les molécules peuvent également se désexciter physiquement par des processus tels que la fluorescence ou la phosphorescence.

Les processus de désexcitation les plus importants dans le cas du photovieillissement sont ceux conduisant à la formation de radicaux libres :

* le clivage photolytique (processus chimique) provoque la coupure d'une chaîne moléculaire en deux chaînes plus courtes, radicalaires ou non;

* la photosensibilisation (processus physique) résulte d'un transfert d'énergie. Une molécule absorbante D peut se désexciter en transférant de l'énergie à une autre molécule A non absorbante. Ce principe peut être schématisé de la façon suivante:

$$D + h\nu \longrightarrow D^* \,/\, D^* + A \longrightarrow A^* + D$$

La molécule "accepteur" A, à son tour excitée (A*), peut éventuellement se désexciter selon différents processus, parmi lesquels le clivage photolytique.

Sous irradiation, différentes réactions élémentaires (processus chimique), destructrices ou non, peuvent intervenir, conduisant entre autre à des espèces radicalaires capables de réagir avec l'oxygène de l'air pour fournir de nouvelles espèces instables et des produits secondaires de réactions radicalaires.

De telles dégradations ont notamment été observées sur des matériaux comprenant des colorants tels que des colorants dichroïques ou photochromiques. Ces familles de produits chimiques contiennent généralement des motifs aromatiques dont certaines entités peuvent être sensibles à des rayonnements UV dans au moins certaines longueurs d'ondes spécifiques. Comme nous l'avons vu précédemment, ces phénomènes de photodégradation peuvent se combiner à des phénomènes de photooxydation par l'oxygène de l'air. Ces phénomènes sont complexes car ils font appel à des espèces réactives multiples. Ils sont donc difficilement caractérisables et identifiables. De ce fait, une des meilleures solutions pour limiter ces phénomènes est de protéger les produits comprenant de telles entités sensibles aux UV et/ou à l'oxygène en les revêtant d'au moins une couche de protection contre la photodégradation (revêtement anti-UV) et optionnellement d'une couche additionnelle de protection contre la photooxydation (couche barrière à l'oxygène).

Les colorants dichroïques sont particulièrement utilisés en association avec des cristaux liquides, notamment dans des revêtements à fonction polarisante. Une telle association se trouve notamment dans des revêtements dénommés "polymères à cristaux liquides "(LCP: Liquid Crystalline Polymer). Ce revêtement, associé à un revêtement de "photopolymère linéaire (LPP)", permet notamment de conférer au substrat le comprenant une fonction polarisante. De tels revêtements sont notamment utilisés dans des écrans d'affichage, mais peuvent également être utilisés avec des articles optiques (US 5 602 661, US 2005/0151926; EP 1 593 990). Ainsi l'utilisation d'un tel revêtement sur un substrat optique, tel qu'une lentille ophtalmique, permet de conférer à ladite lentille des propriétés polarisantes particulièrement performantes. Il est ainsi possible d'obtenir des lentilles ophtalmiques présentant un facteur de transmission relatif dans

le visible (T$_v$) compris entre 80% et 6%, associé à un rapport de contraste qui est supérieur à celui généralement observé pour des lentilles polarisantes obtenues par collage ou laminage d'un film polarisant, et qui atteint couramment des valeurs supérieures à 100. L'utilisation d'un revêtement de type photopolymère linéaire (LPP) et de type polymères cristaux liquides (LCP) déposés par centrifugation (*spin*) sur un substrat organique permet ainsi d'obtenir des lentilles ophtalmiques à haut pouvoir de polarisation. De plus l'utilisation d'un procédé par centrifugation pour introduire la fonction polarisante est particulièrement intéressante dans le domaine des lentilles ophtalmiques car ce procédé s'intègre pleinement dans les chaînes de production.

Dans la présente demande, les définitions de certains termes doivent être comprises de la façon suivante :

- par article optique on entend les lentilles optiques d'instrumentation et de visée, les visières et les lentilles ophtalmiques,
- par lentille ophtalmique, on entend les lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives ;
- par substrat, on entend le matériau transparent constitutif de base de la lentille optique et plus particulièrement de la lentille ophtalmique. Ce matériau sert de support à l'empilement d'un ou plusieurs revêtements comprenant notamment les revêtements polarisants;
- par revêtement, on entend toute couche, film ou vernis pouvant être en contact avec le substrat, et/ou avec un autre revêtement déposé sur celui-ci, et pouvant notamment être choisi parmi les revêtements teintés, anti-reflets, anti-salissures, anti-chocs, anti-rayures, polarisants et antistatiques.

L'efficacité du polariseur bicouche décrit ci-dessus comprenant un revêtement LPP et un revêtement LCP, est dépendante des spectres d'absorption du ou des colorants dichroïques, du rapport dichroïque desdits colorants, ainsi que du paramètre d'ordre, c'est-à-dire, de l'alignement moyen des molécules de cristaux liquides (donc des colorants dichroïques) suivant une direction particulière, imposée par la structuration de la couche LPP. La structuration de la couche LPP a lieu lors de l'étape de polymérisation de cette dernière sous lumière polarisée linéairement. Des essais de vieillissement de tels polariseurs sous lampe UV (Suntest) ont mis en évidence une forte dégradation des propriétés optiques de la lentille ophtalmique comprenant ce système bicouches. Elle se traduit notamment par une perte des performances polarisantes, en particulier par une chute du rapport de contraste (CR), par une augmentation de la transmission (Tv%) et par un changement de teinte. Cette dégradation des performances est due principalement à la sensibilité aux UV des colorants dichroïques qui, comme décrit précédemment, subissent des phénomènes de photodégradation et de photooxydation dus aux ultraviolets, à l'oxygène et à une action combinée des ultraviolets et de l'oxygène.

Une telle sensibilité aux UV n'est pas acceptable pour une lentille ophtalmique polarisante qui devrait être particulièrement utile dans des conditions de fort ensoleillement. Une solution à ce problème technique est donc de disposer d'un revêtement protecteur, compatible avec les propriétés optiques d'une lentille ophtalmique. Ledit revêtement doit ainsi être transparent, c'est-à-dire qu'il ne doit pas présenter de diffusion ou de diffraction de la lumière visible, il doit adhérer de façon durable et permanente au revêtement dont il doit assurer la protection, et être compatible avec les autres couches fonctionnelles classiquement utilisées dans le domaine de l'ophtalmique telle qu'une couche protectrice à l'abrasion.

On connaît de nombreux systèmes conférant des propriétés anti-UV à un revêtement. Aucun de ces systèmes ne remplit l'ensemble des conditions précédemment définies. En effet dans le cas présent le problème technique est certes d'obtenir un revêtement de protection contre la photodégradation (anti-UV), mais ce revêtement anti-UV doit pouvoir adhérer au système bicouche polarisant sous-jacent tout en conservant des propriétés optiques et cosmétiques acceptables à sa destination, c'est-à-dire une lentille ophtalmique.

La Demanderesse a constaté avec surprise qu'il était possible d'obtenir un revêtement de protection contre la photodégradation, qui remplit l'ensemble des conditions mentionnées ci-dessus, en synthétisant ce revêtement par polymérisation photoamorcée d'un mélange d'oligomères acryliques et de monomères acryliques.

La présente invention a par conséquent pour objet un article optique, notamment une lentille ophtalmique, comprenant dans cet ordre :

- un substrat,
- un premier revêtement comprenant au moins un colorant sensible à la photodégradation directement appliqué sur le substrat, et
- un deuxième revêtement pour la protection contre la photodégradation (anti-UV) du revêtement comprenant au moins un colorant sensible à la photodégradation, directement appliqué sur le premier revêtement, le revêtement pour la protection contre la photodégradation résultant de la photopolymérisation d'un mélange contenant :

(i) un mélange d'oligomères acrylate et de monomères acrylate monofonctionnels ou multifonctionnels;

(ii) de 5 % à 30 % en masse, rapporté au mélange de (i), (ii) et (iii), d'au moins un absorbeur UV, et

(iii) de 3 % à 12 % en masse, rapporté au mélange de (i), (ii) et (iii), d'au moins un photoamorceur.

Optionnellement ledit revêtement peut comprendre des additifs tels que des surfactants ou des composés permettant d'éviter l'inhibition de l'oxygène comme par exemple un mélange d'amine acrylique et de benzophénone.

Le document US2003/027960 concerne une composition acrylique polymérisable et durcissable pour lentilles ophtalmiques mais il ne divulgue pas un article comprenant de 5 % à 30% en masse d'absorbeurs UV. Il ne divulgue pas non plus une structure tripartite avec dans cet ordre un substrat, un premier revêtement photosensible et un deuxième revêtement photoprotecteur.

Une telle structure tripartite n'est pas non plus décrite dans le document US 2005/159514 qui divulgue la préparation d'un revêtement photoprotecteur vinylique, et non pas acrylique comme dans la présente invention, déposé directement sur un substrat (support) et non pas sur un revêtement intermédiaire contenant un colorant photosensible.

L'oligomère acrylate est choisi de préférence parmi un oligomère époxy acrylate aliphatique, un oligomère époxy acrylate aromatique, un oligomère uréthane acrylate aliphatique, un oligomère uréthane acrylate aromatique, et un oligomère polyester acrylate. La masse molaire moyenne en nombre ($M_n$) de cet oligomère est de préférence comprise entre 500 g/mol et 10 000 g/mol.

Parmi les oligomères acrylate ci-dessus, on préfère en particulier un oligomère uréthane acrylate aliphatique difonctionnel de masse molaire moyenne en nombre ($M_n$) d'environ 2200 g/mol. D'une façon particulièrement avantageuse l'oligomère utilisé dans le cadre de l'invention est l'oligomère uréthane acrylate aliphatique difonctionnel commercialisé sous la dénomination CN981 par la société Cray Valley. Cet oligomère uréthane acrylique est particulièrement apte à être utilisé dans des lentilles optiques. En effet, il présente une faible température de transition vitreuse (Tg) conférant ainsi au revêtement qui le comprend des propriétés de résistance aux chocs. De plus, les fonctions uréthanes, grâce à leur polarité, permettent de conférer au revêtement des propriétés d'adhésion particulièrement intéressantes dans le cas où la lentille ophtalmique comprend des couches additionnelles.

Les monomères acrylates peuvent être monofonctionnels ou multifonctionnels. Ils présentent avantageusement une viscosité inférieure à celle de l'oligomère facilitant ainsi le dépôt du revêtement sur un substrat, notamment si le procédé de dépôt est un procédé de dépôt par centrifugation (spin).

Ces composés permettent de moduler les propriétés mécaniques et physicochimiques du revêtement. Ainsi il est connu de l'homme du métier qu'un monomère trifonctionnel ou tétrafonctionnel de faible masse molaire conduit à un système ayant une forte densité de réticulation se traduisant par une bonne résistance à l'abrasion, une bonne résistance chimique, ainsi que par une bonne tenue en température. Par contre, il est aussi connu que de tels systèmes contenant des monomères tri- ou tétrafonctionnels induisent un fort retrait lors de la polymérisation et par conséquent conduisent à une mauvaise adhésion au substrat ou revêtement sous-jacent sur lequel est déposé ce revêtement. Le retrait génère des contraintes aux interfaces pouvant entraîner la séparation par délamination du revêtement.

Les monomères monofonctionnels utilisables dans la présente invention sont avantageusement choisis parmi l'isobornyl acrylate (IBOA), le tétrahydrofurfuryl acrylate (THFA), le lauryl acrylate et le 2-phénoxyéthyl acrylate (PEA). Les monomères difonctionnels utilisables dans le cadre de l'invention sont par exemple le 1,6-hexanediol diacrylate (HDDA), le tricyclodécanediméthanol diacrylate (TCDDMDA), le diéthylène glycol diacrylate (DEGDA), le polyéthylèneglycol diacrylates, le tétraéthylèneglycol diacrylate, le triéthylèneglycol diacrylate, le tripropylèneglycol diacrylate, le polyéthylèneglycol diacrylate, le bisphénol-A éthoxylé diacrylate, le dipropylène glycol diacrylate, l'hexanediol alkoxylé diacrylate, l'esterdiol diacrylate, le polypropylène glycol diacrylate et le néopentyl glycol propoxylé diacrylate.

Dans le cadre de la présente invention, il est envisagé en particulier d'utiliser dans la composition servant à la préparation du revêtement de protection contre la photodégradation un mélange d'au moins deux monomères monofonctionnels et/ou difonctionnels tels que définis précédemment.

Dans une première variante avantageuse de l'invention, le revêtement de protection contre la photodégradation comprend un mélange d'oligomère acrylate et de monomère acrylate monofonctionnel. Préférentiellement ledit revêtement comprend un mélange de CN981 (Cray Valley) et d'isobornyl acrylate (IBOA).

Dans une seconde variante de l'invention, le revêtement comprend un mélange d'oligomère acrylate et d'au moins un monomère acrylate multifonctionnel. Contre toute attente l'ajout de monomère acrylate multifonctionnel a permis de conserver une bonne adhésion au substrat. Cette combinaison permet également d'améliorer la tenue chimique et mécanique du revêtement de protection fini. Dans le cadre de l'invention le ou les monomères acrylates multifonctionnels sont avantageusement choisis parmi le triméthylolpropane ethoxylé triacrylate (TMPEOTA), le pentaérythritol tétraacrylate (PETTA), le triméthylolpropane triacrylate (TMPTA), ditriméthylolpropane tétraacrylate (Di-TMPTTA), le tris(2-hydroxyéthyl)isocyanurate triacrylate (THEICTA), le dipentaérythritol pentaacrylate (DiPEPA), le pentaérythritol triacrylate, le trimethylolpropane propoxylé-3 triacrylate (TMPPOTA), le pentaérythritol éthoxyle-4 tetraacrylate (PPTTA), le pentaérythritol ethoxylé-5 triacrylate, le pentaerythritol ethoxylé-5 tétraacrylate, et le glycerol propoxylé triacrylate (GPTA).

Préférentiellement le monomère acrylate multifonctionnel est choisi parmi le pentaérythritol triacrylate, le tris(2-hydroxyéthyl)isocyanurate triacrylate (THEICTA), le tricyclodécanediméthanol diacrylate (TCDDMDA) et le dipentaérythritol pentaacrylate (DiPEPA). Ces monomères sont notamment commercialisés par la société Cray Valley sous les références respectives SR444D, SR368, SR833S et SR399.

Le rapport en poids monomère(s) acrylate /oligomère uréthane acrylate est compris entre 0,5 et 6, de préférence entre 2 et 5.

Selon une seconde variante avantageuse de l'invention, le revêtement anti-UV comprend un oligomère uréthane acrylate aliphatique difonctionnel de masse moléculaire moyenne en nombre ($M_n$) égale à 2200 g/mol et un monomère acrylate multifonctionnel choisi parmi le SR444D, SR368, SR 833S et SR399, le rapport en masse monomère multifonctionnel/oligomère étant compris entre 0,2 et 5.

Dans une troisième variante de l'invention, le revêtement comprend un mélange d'oligomère acrylate, de monomère(s) acrylate monofonctionnel(s) et de monomère(s) acrylate multifonctionnel(s), le rapport en poids monomère(s) acrylate/oligomère étant compris entre 0,2 et 6, et la proportion monomère(s) monofonctionnel(s)/monomère(s) multifonctionnel(s) est supérieure à 50%.

Les absorbeurs UV les plus couramment utilisés sont choisis parmi les benzotriazoles, en particulier l'hydroxyphénylbenzotriazole, l'hydroxyphényl-S-triazine, les hydroxy-benzophénones et les anilides oxaliques. L'absorbeur UV est préférentiellement choisi parmi les absorbeurs de la famille des hydroxybenzophénones et des benzotriazoles. Ces absorbeurs se distinguent en particulier par la bonne compatibilité avec la matrice qui les contient, c'est-à-dire, la matrice obtenue par mélange de l'oligomère et du monomère acrylate, et d'autre part, ils sont particulièrement adaptés pour absorber les UV aux longueurs d'onde engendrant le plus de photodégradation des colorants sensibles aux UV, dans la plage intéressante dans le cadre de l'invention. Les absorbeurs UV préférentiellement choisis sont le CYASORB® UV 24 et l'UV5411, commercialisés par la société CYTEC. Il s'agit respectivement de la 2,2'-dihydroxy-4-méthoxybenzophenone et du 2-{[5-(2,2-diéthyl)butyl]-(2-hydroxy)phényl}-benzotriazole.

La quantité d'absorbeur UV ainsi que l'épaisseur du revêtement de protection contre la photodégradation sont ajustées dans la formulation afin d'obtenir une coupure UV (longueur d'onde pour laquelle la transmittance (T%) est <1%) au moins égale à 360 nm, et de préférence égale à 395 nm. La formulation comprend ainsi de 5% à 30%, en masse, préférentiellement de 10% à 20% en masse, et en particulier de 12% à 18% en masse d'absorbeur UV.

L'épaisseur du revêtement est comprise entre 5 et 30 microns, préférentiellement entre 15 et 22 microns.

Le choix du photoamorceur est guidé par son spectre d'absorption qui doit être calé sur le spectre d'émission des lampes UV et décalé par rapport au spectre d'absorption de l'absorbeur UV.

L'Irgacure 819, un oxyde de bis-acylphosphine (BAPO) commercialisé par la société Ciba, a été sélectionné. Il présente des pics d'absorption jusqu'à 405 nm. La formulation comprend de 3% à 12% en masse de photoamorceur, préférentiellement de 5% à 8% et très préférentiellement à peu près 6%. D'autres photoamorceurs sont utilisables, et à titre indicatif on peut citer le Darocur TPO (Mono Acyl Phosphine (MAPO)), le Darocur 4265 (mélange de MAPO et d'$\alpha$-hydroxycétone 50%/50%), l'Irgacure 2022 (mélange de BAPO et d'$\alpha$-hydroxycétone 20%/80%), Irgacure 784 (bis (eta-5-2,4-cyclopentadien-1-yl)Bis[2,6-difluoro-3-(1H-pyrrol-1-yl)phenyl]titanium). Un mélange d'au moins deux photoamorceurs peut également être utilisé.

Le substrat de l'article optique, en particulier de la lentille ophtalmique, peut être de type minéral ou organique. A titre indicatif mais non limitatif, on peut citer comme substrat organique pouvant être utilisé dans le cadre de l'invention les substrats classiquement utilisés en optique et en ophtalmie. Par exemple, sont adaptés les substrats du type polycarbonate; polyamide ; polyimides ; polysulfones ; copolymères de poly(éthylènetérephtalate) et polycarbonate; polyoléfines, notamment polynorbornènes ; polymères et copolymères de diéthylèneglycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide.

Dans un mode de réalisation préféré de l'invention, l'article optique est une lentille ophtalmique comprenant

- un substrat,
- un revêtement comprenant au moins un colorant sensible à la photodégradation, et
- un revêtement pour la protection contre la photodégradation, et optionnellement
- une couche barrière à l'oxygène choisie parmi une couche d'oxyde métallique dense, une couche d'oxyde métallique non dense et un système comprenant un empilement de 1 à 4 couches d'oxydes métalliques différents.

Dans un autre mode de réalisation préféré de l'invention, l'article optique est une lentille ophtalmique polarisée, comprenant

- un substrat,

- un revêtement polarisant bicouches comprenant une première couche de photopolymères linéaires (LPP) et une seconde couche de cristaux liquides polymères (LCP) comprenant au moins un colorant dichroïque sensible à la photodégradation,

- un revêtement pour la protection contre la photodégradation,

- un revêtement anti-abrasion bicouches et

- une couche barrière à l'oxygène.

Des essais ont été réalisés notamment sur une telle lentille ophtalmique polarisante comprenant un revêtement bicouche polarisant (LPP+LCP) comprenant au moins un colorant dichroïque, et un revêtement de protection contre la photodégradation. Le dépôt du revêtement bicouche (LPP+LCP) a été réalisé conformément au protocole décrit dans la demande de brevet (EP 1 593 990) Les résultats sont excellents. Néanmoins en fonction du temps d'exposition et de la nature des colorants dichroïques contenus dans la couche LCP, des réactions secondaires dues à l'oxygène de l'air peuvent toujours se produire. Pour prévenir cette photo-oxydation, l'utilisation d'une couche barrière à l'oxygène à été envisagée. De tels revêtements sont connus de l'homme de l'art. A titre indicatif, on peut citer le brevet JP 06-192651 qui décrit l'utilisation de fines couches comprenant des particules d'oxydes métalliques et des particules de métal comme couche protectrice vis-à-vis de l'eau et des gaz d'une couche sous-jacente comprenant des colorants photochromiques.

Une couche barrière à l'oxygène comprend soit une couche d'oxyde métallique dense, soit une couche d'oxyde métallique non dense, soit un système comprenant un empilement de 1 à 4 couches d'oxydes métalliques différents.

La couche barrière à l'oxygène peut être constituée d'un film mono- ou multicouche, de matériaux tels que SiO, $SiO_2$ $Si_3N_4$, $TiO_2$ $ZrO_2$, $Al_2O_3$, $MgF_2$ ou $Ta_2O_5$, ou leurs mélanges. D'une façon avantageuse, le système monocouche comprend du dioxyde de silicium, et présente une épaisseur comprise entre 10 et 100 nm. L'empilement comprend avantageusement une alternance d'au moins deux monocouches d'oxydes différents ces derniers étant avantageusement choisis parmi les oxydes de silicium, de titane, et de zirconium. L'empilement présente avantageusement une épaisseur comprise entre 50 nm et 300 nm, préférentiellement entre 100 et 200 nm.

Dans le cadre de l'invention il est également possible de combiner le revêtement de protection contre la photodégradation avec un revêtement de type miroir, celui-ci présentant également une fonction barrière à l'oxygène. La couche barrière à l'oxygène peut être déposée soit directement sur le revêtement de protection contre la photodégradation (anti-UV) tel que décrit précédemment, ou sur un revêtement primaire anti-choc et/ou un primaire résistant à l'abrasion.

Ce revêtement barrière à l'oxygène est appliqué par des méthodes bien connues de l'homme du métier, et généralement par dépôt sous vide selon l'une des techniques suivantes :

- par évaporation, éventuellement assistée par faisceau ionique;
- par pulvérisation par faisceau d'ions;
- par pulvérisation cathodique;
- par dépôt chimique en phase vapeur assistée par plasma.

L'invention a également pour objet un procédé de fabrication d'un article optique tel que décrit ci-dessus, en particulier d'une lentille ophtalmique, colorée et/ou polarisée, comprenant les étapes suivantes:

- déposer sur un substrat nu ou sur un substrat revêtu d'au moins une couche de vernis, un revêtement comprenant au moins un colorant sensible à la photodégradation;
- réaliser optionnellement une préparation de surface du substrat revêtu obtenu, préférentiellement une préparation de surface chimique,
- déposer par centrifugation le revêtement de protection contre la photodégradation ;
- photopolymériser ledit revêtement de protection contre la photodégradation.

Dans le cadre de ce procédé, le substrat nu ou revêtu d'au moins une couche de vernis peut, optionnellement et préalablement au dépôt du revêtement comprenant au moins un colorant sensible à la photodégradation, subir un traitement de surface. Parmi les traitements de surface classiquement utilisés dans le cadre des procédés de réalisation de lentilles ophtalmiques on peut citer à titre indicatif et non limitatif, les traitements chimiques, thermiques, plasma et/ou corona.

On peut revêtir le revêtement de protection contre la photodégradation soit directement avec une couche résistant à l'abrasion, soit avec une couche de primaire, améliorant la résistance au choc de l'article, sur laquelle est déposée ensuite une couche résistante à l'abrasion, la couche de primaire améliorant également l'ancrage de cette couche résistant à l'abrasion. On peut également envisager le dépôt, sur la couche résistant à l'abrasion, d'un revêtement anti-reflets et enfin on peut revêtir ce revêtement anti-reflet d'un revêtement anti-salissures hydrophobe et oléophobe. Un revêtement antistatique peut également être présent.

La couche de primaire, lorsqu'elle est présente, peut être toute couche de primaire classiquement utilisée dans le domaine optique et en particulier ophtalmique.

Typiquement, ces primaires, en particulier les primaires anti-choc, sont des revêtements à base de polymères (méth)acryliques, de polyuréthanes, de polyesters, ou encore à base de copolymères époxy/(méth)acrylate.

Le revêtement anti-abrasion peut être tout revêtement anti-abrasion classiquement utilisé dans le domaine de l'optique et en particulier de l'optique ophtalmique.

Par définition, un revêtement anti-abrasion est un revêtement qui améliore la résistance à l'abrasion de l'article d'optique fini comparé au même article ne comportant pas le revêtement anti-abrasion.

Les revêtements anti-abrasion préférés sont ceux obtenus par durcissement d'une composition incluant un ou plusieurs époxyalcoxysilanes ou un hydrolysat de ceux-ci, de la silice et un catalyseur de durcissement. Des exemples de telles compositions sont décrits dans la demande internationale WO 94/10230 et les brevets US 4 211 823, US 5 015 523, ainsi que le brevet européen EP 614 957.

L'invention a en outre pour objet un autre procédé de fabrication d'un article optique tel que décrit ci-dessus, en particulier d'une lentille ophtalmique polarisée, comprenant les étapes suivantes:

- déposer sur un substrat, de préférence un substrat organique, un revêtement polarisant bicouches comprenant une première couche de photopolymère linéaire (LPP) directement en contact avec la surface du substrat, et une seconde couche de polymère à cristaux liquides (LCP) comprenant au moins un colorant dichroïque sensible à la photodégradation, préférentiellement un mélange de colorants dichroïques, directement en contact avec ladite première couche;
- réaliser une préparation de surface du substrat comprenant le revêtement polarisant bicouches obtenu, en le trempant successivement dans un bain de soude à 5%, dans de l'eau et dans de l'isopropanol,
- déposer par centrifugation un revêtement de protection contre la photodégradation; et
- photopolymériser ledit revêtement de protection contre la photodégradation.

Le revêtement polarisant bicouche est réalisé avantageusement selon les conditions opératoires décrites dans la demande de brevet EP 1 593 990.

D'une façon particulièrement avantageuse le procédé ci-dessus comprend en outre une étape supplémentaire consistant à déposer sur le revêtement de protection contre la photodégradation, un revêtement anti-abrasion bicouche comprenant :

- une première couche, directement en contact avec la surface du revêtement de protection contre la photodégradation, comprenant une dispersion aqueuse de polyuréthane;
- une seconde couche résistante à l'abrasion comprenant des hydrolysats d'aluminium et de silane.

Des tests de résistance à la rayure ont été réalisés sur des lentilles ophtalmiques comprenant un tel empilement. D'une façon surprenante, les lentilles comprenant un revêtement anti-UV présentent une résistance à la rayure supérieure aux lentilles comprenant uniquement un revêtement anti-abrasion tel que décrit précédemment. Le revêtement anti-UV ayant une température de transition vitreuse faible (Tg d'environ 20 °C), on s'attendait au contraire à l'observation du phénomène inverse. Ainsi le revêtement anti-UV selon l'invention permet non seulement de conférer une propriété de protection vis-à-vis de la photodégradation et de la photo-oxydation, mais permet également d'apporter à la lentille ophtalmique comportant ce revêtement, des propriétés de résistance à la rayure, renforçant ainsi au final la résistance à l'abrasion de l'article optique comprenant un tel empilement.

Dans une variante particulièrement préférentielle, le procédé de fabrication d'un article optique et en particulier d'une lentille ophtalmique polarisée telle que décrite précédemment, comprend en plus une étape consistant à déposer sur le revêtement de protection contre la photodégradation ou sur le revêtement anti-abrasion bicouche, une couche barrière à l'oxygène choisie parmi une couche d'oxyde métallique dense, une couche d'oxyde métallique non dense, et un système comprenant un empilement de 1 à 4 couches d'oxydes métalliques différents.

Les exemples suivants illustrent une réalisation de l'invention et ne limitent en aucun cas la portée de l'invention.

**EXEMPLE : Préparation d'une lentille ophtalmique polarisante comprenant un revêtement de protection contre la photodégradation**

Le revêtement polarisant est appliqué sur une lentille haut indice dont le substrat est un polythiouréthane. Le polythiol préféré est le 1,2-bis(2'-mercaptoéthylthio)-3-mercaptopropane (MDO). L'isocyanate préféré est le m-xylènediisocyanate.

**1. Préparation du revêtement bicouche polarisant:**

Le mode opératoire est tel que décrit dans la demande de brevet EP 1 593 990

*a. Préparation de la couche LPP et dépôt:*

La lentille est lavée dans une solution de soude à 5% dans un bain d'ultrasons à 55°C. Elle est ensuite trempée dans de l'eau puis dans de l'eau désionisée (éventuellement dans de l'isopropanol). Une solution à 2% en poids comprenant un polymère acrylique présentant des fonctions acides cinnamiques est préparée dans un mélange de méthyléthylcétone et de cyclopentanone (10:1). Cette solution est déposée par centrifugation (*spin*) sur le substrat de la lentille. La vitesse de rotation est de 500 rpm pendant 3 secondes, puis de 2500 rpm pendant 20 secondes. Le solvant est évaporé par chauffage dans une étuve à 100°C pendant 20 minutes. Cette couche est irradiée sous un polariseur UV à une dose de 100 mJ/cm$^2$.

*b. Préparation de la couche LCP et dépôt:*

Une solution contenant des molécules de cristaux liquides et des colorants dichroïques sensibles à la dégradation par les ultraviolets et l'oxygène est préparée dans la cyclohexanone. La partie solide contenue dans cette solution est typiquement de 40% en poids. La quantité de colorant dichroïque est d'environ 10% en poids. Cette solution est déposée par centrifugation sur la couche de LPP (vitesse de rotation = 500 rpm pendant 25 secondes). La couche de LCP est séchée pendant 10 minutes à une température de 87°C. Après évaporation des solvants, cette couche est réticulée sous atmosphère d'azote par irradiation en présence d'une source UV à une dose de 30 J/cm$^2$.

**2. Préparation du revêtement de protection contre la photodégradation**

L'oligomère utilisé est l'uréthane acrylate commercialisé sous la dénomination CN 981 par la société Cray Valley. Le monomère monofonctionnel est l'isobomyle acrylate (IBOA) commercialisé sous la référence SR506D par la société Cray Valley.

*a. Préparation de la formulation :*

- Afin de diminuer la viscosité de l'oligomère, il est chauffé dans une étuve à 60°C pendant un 1 heure.

- Dans un flacon en verre sont introduits 12 g de CN 981, 48 g de SR 506D, 4,8 g d'Irgacure 819 (photoamorceur) et 12 g de Cyasorb UV-24 (absorbeur UV).

Les pourcentages massiques des composés sont 15,7% de CN981, 62,5% de SR 506D, 6,2% d'Irgacure 819 et 15,6% de Cyasorb UV-24.

- Afin d'homogénéiser la solution et de dissoudre complètement l'absorbeur UV, la solution est laissée sous agitation pendant 12 heures à température ambiante.

*b. Procédé de dépôt*

- Préparation de surface: La lentille comprenant le revêtement polarisant bicouche subit une préparation de surface: la lentille est plongée dans un premier bain de soude à 5% dont la température est de 50°C. Elle est ensuite rincée dans un bain d'eau adoucie. Un dernier bain d'isopropanol permet de faciliter le séchage du verre.

- Dépôt de la formulation : la composition pour le revêtement de protection contre la photodégradation est déposé par centrifugation à la vitesse de 1000 rpm pendant 20 secondes afin d'obtenir une épaisseur finale de 20 microns.

- Polymérisation du revêtement : un four à défilement commercialisé par la société Fusion US Systems (référence LH6 "Light Hammer") est utilisé. Il est muni d'une lampe référencée « V » par la société Fusion UV Systems. La vitesse de défilement du tapis est de 8,2 m/min. La lentille est passée quatre fois sous la lampe "V". La dose totale de rayonnement reçue par le revêtement pour obtenir sa polymérisation est de 2,5 J/cm$^2$.

La coupure UV du revêtement ainsi déposé est de 396 nm (la coupure UV est définie par la longueur d'onde pour laquelle la transmission devient inférieure à 1%).

### 3. Préparation du revêtement bicouches anti-abrasion:

Le revêtement bicouches anti-abrasion est obtenu selon les étapes suivantes:

- premièrement une couche de primaire latex est obtenue selon le protocole décrit dans l'exemple 1 du brevet US 5,316,791 en utilisant comme substrat une dispersion aqueuse de polyuréthane commercialisée par la société Baxenden sous la référence W-240. Cette première couche est déposée par trempage sur la lentille portant le revêtement polarisant décrit dans l'étape 1 et le revêtement de protection contre la photodégradation tel que décrit dans l'étape 2 et est chauffée à 87°C pendant 4 minutes; l'épaisseur de cette couche est de 1 $\mu$m.

- sur cette première couche est déposée une couche obtenue selon le protocole décrit dans l'exemple 3 du brevet EP 0 614 957. Cette deuxième couche comprend, par rapport au poids total de la composition, 22% de glycidoxypropylméthyldiméthoxysilane, 62% de silice colloïdale, représentant 30% de la partie solide dans le méthanol, et 0,70% d'aluminium acétylacétonate (un catalyseur), la différence jusqu'à 100 % en poids consistant principalement en eau. Cette couche est déposée par trempage de la lentille dans ladite solution puis est polymérisée pendant 3 heures à 100°C. L'épaisseur de cette couche est de 3,5 $\mu$m.

### 4. Préparation du revêtement barrière à l'oxygène:

La couche barrière à l'oxygène est un système multicouches à quatre couches, comprenant une alternance de couche de $ZrO_2$ et $SiO_2$. L'épaisseur totale de l'empilement est de 200 nm (nanomètre).
Les différentes couches sont réalisées dans une machine Balzers BAK, en rotation sous un vide poussé.

### 5. Test de vieillissement aux ultra-violets : Suntest

Les configurations suivantes ont été comparées par Suntest :

- **Exemple 1:** Lentille comprenant un revêtement polarisant bicouches (Polarisé) + Revêtement bicouche anti-abrasion

- **Exemple 2:** Polarisé + Revêtement de protection contre la photodégradation + Revêtement anti-abrasion

- **Exemple 3:** Polarisé + Revêtement anti-abrasion + Revêtement barrière $O_2$

- **Exemple 4:** Polarisé + Revêtement de protection contre la photodégradation + Revêtement anti-abrasion + Revêtement barrière $O_2$

La tenue aux UV des revêtements polarisés comprenant un système bi-couche LPP+LCP est déterminée après exposition des verres au Suntest.
Le principe de ce test est décrit ci-dessous :

Les verres sont placés dans l'équipement Suntest qui produit un éclairement de 60 klux. Ils subissent des cycles successifs de vieillissement solaire de 50 heures. La durée totale d'exposition varie de 50 à 200 heures. A l'issue de chaque cycle d'éclairement, une ou plusieurs caractéristiques optiques du produit sont mesurées pour déterminer une éventuelle évolution. Il s'agit principalement de la transmission visuelle (Tv), du rapport de contraste (CR) et de la teinte (L*, a*, b*).

L'exemple 1 montre le comportement d'un verre polarisé sans aucune protection aux UV. Après 50 h au Suntest, on note (voir Tableau 1) une importante diminution de l'efficacité de polarisation, mesurée par le rapport de contraste (CR), ainsi qu'un changement de coloration ($\Delta E$) des lentilles et une augmentation de la transmission (Tv%). Dans chacun des tableaux, CR est le rapport de contraste, et $\Delta E$ est l'écart colorimétrique :

$$\Delta E = (\Delta L^2 + \Delta a^2 + \Delta b^2)^{1/2}$$

Tableau 1

|  | Tv (%) | ΔTv/Tv | ΔE | CR |
|---|---|---|---|---|
| 0h | 15.88 | 0 | 0 | 512 |
| 25h | 17.29 | 8.9 | 8.5 | / |
| 50h | 19.38 | 22.04 | 12.5 | 59 |
| 75h | 21.10 | 32.9 | 15.1 | 30 |
| 100h | 23.16 | 45.8 | 18.8 | 19 |
| 200h | 32.23 | 103.0 | 27.8 | 6 |

L'exemple 2 illustre le comportement d'une lentille ophtalmique polarisante comprenant un revêtement de protection contre la photodégradation tel que décrit précédemment. Le tableau 2 présente les résultats du Suntest.

Tableau 2

|  | Tv (%) | ΔTv/Tv | ΔE | CR |
|---|---|---|---|---|
| 0h | 14.37 | 0 | 0 | 367 |
| 25h | 15.07 | 4.9 | 3.8 | / |
| 50h | 14.65 | 1.9 | 5.5 | 131 |
| 75h | 15.32 | 6.6 | 7.3 | 127 |
| 100h | 15.22 | 5.9 | 8.9 | 64 |
| 200h | 16.98 | 18.2 | 14.0 | 27 |

L'exemple 3 illustre le comportement d'une lentille ophtalmique polarisante comprenant une couche barrière à l'oxygène tel que décrit précédemment. Le tableau 3 présente les résultats du Suntest.

Tableau 3

|  | Tv (%) | ΔTv/Tv | ΔE | CR |
|---|---|---|---|---|
| 0h | 16.01 | 0 | 0 | 298 |
| 25h | 16.91 | 5.6 | 2.0 | / |
| 50h | 17.81 | 11.2 | 3.7 | 188 |
| 75h | 17.78 | 11.0 | 4.0 | 127 |
| 100h | 19.50 | 21.8 | 6.2 | 121 |
| 200h | 21.09 | 31.7 | 8.7 | 75 |

L'exemple 4 décrit le comportement d'une lentille ophtalmique polarisante comprenant un revêtement de protection contre la photodégradation et une couche barrière à l'oxygène tels que décrits précédemment. Le tableau 4 présente les résultats du Suntest.

Tableau 4

|  | Tv (%) | ΔTv/Tv | ΔE | CR |
|---|---|---|---|---|
| 0h | 14.65 | 0 | 0 | 188 |
| 25h | 15.78 | 7.7 | 1.8 | / |
| 50h | 16.18 | 10.4 | 2.3 | 157 |
| 75h | 15.93 | 8.7 | 2.0 | 127 |

(suite)

|  | Tv (%) | ∆Tv/Tv | ∆E | CR |
|---|---|---|---|---|
| **100h** | 15.68 | 7.0 | 1.7 | 130 |
| **200h** | 16.39 | 11.9 | 3.0 | 97 |

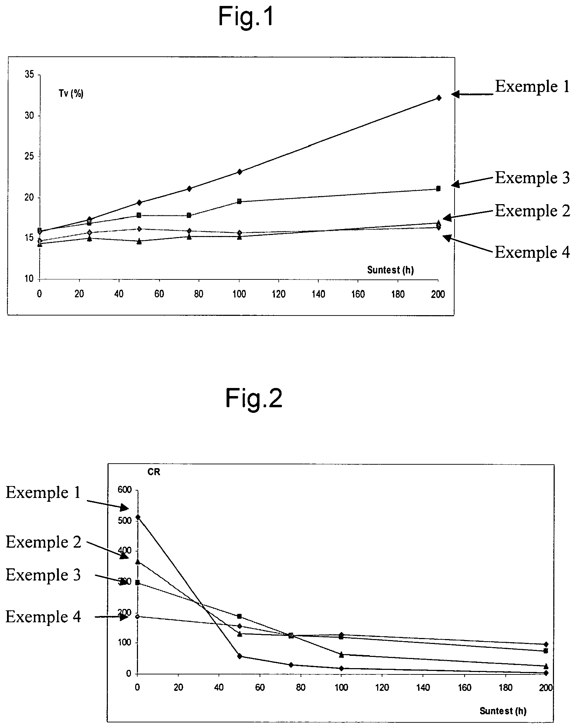

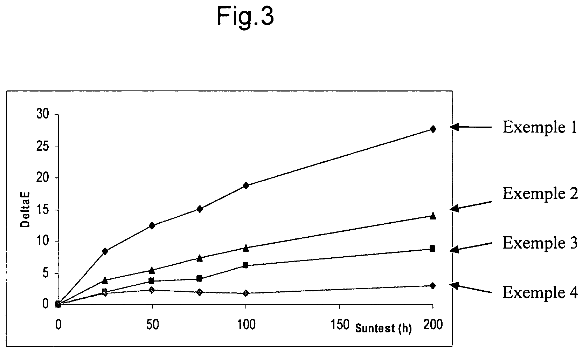

Les figures 1, 2, et 3 représentent les courbes graphiques obtenues à partir des valeurs présentées dans les tableaux 1, 2, 3 et 4. La figure 1 représente l'évolution du Tv(%), la figure 2 représente l'évolution du rapport de contraste (CR) et la figure 3 représente l'évolution de la teinte (∆**E).**

### 6. Test de résistance à la rayure

*Description du test à la laine d'acier* **:** on utilise la laine d'acier extra fine n° 000 STARWAX ; avec un morceau de laine d'acier d'environ 3x3 cm plié sur lui-même, on effectue 10 allers-retours en frottant la lentille revêtu dans le sens des fibres avec une pression constante. La lentille est ensuite essuyée avec un chiffon sec puis rincé à l'alcool. On apprécie ensuite visuellement l'état de la lentille et une notation est attribuée en fonction de la graduation suivante : 0 = aucune rayure ; 1 = verre très peu rayé (0 à 5 rayures) ; 2 = verre peu rayé (≈ 20 rayures) ; 3 = verre assez rayé (≈ 50 rayures) ; 4 = verre très rayé (>50 rayures) ; 5 = substrat nu

Le tableau 5 présente les résultats obtenus:

**Lot 1 :** Lentille ophtalmique comprenant un revêtement polarisant bicouches + un revêtement anti-UV selon l'invention

**Lot 2 :** Lentille ophtalmique comprenant un revêtement polarisant bicouches + un revêtement anti-UV selon l'invention + un revêtement anti-abrasion tel que décrit précédemment

Tableau 5

|  | Lot 1 | Lot 2 |
|---|---|---|
| Notation | 1 | 2 |

### Exemple B: Préparation d'une lentille ophtalmique teintée protégée de la photodégradation

Une lentille ophtalmique Orma® est teintée par trempage dans une solution aqueuse comprenant un colorant (BPI Molecular catalytic black de chez BPI). Après 10 min de trempage (dip-coating) dans la solution maintenue à une température d'environ 91°C-94°C on obtient une lentille ophtalmique teintée présentant un Tv d'environ 17%.

La lentille ophtalmique ainsi obtenue est protégée contre la photodégradation par dépôt du revêtement anti-UV tel que décrit dans le mode opératoire précédent (étape 2.)

Le tableau 6 présente les résultats "Suntest" d'une lentille ophtalmique teintée de référence, sans revêtement anti-UV.

Tableau 6

|  | Tv (%) | ∆Tv/Tv | ∆E |
|---|---|---|---|
| **0h** | 16,67 | 0 | 0,0 |
| **50h** | 17,66 | 6 | 1,8 |
| **100h** | 18,65 | 12 | 3,7 |
| **150h** | 19,91 | 19 | 5,7 |
| **200h** | 21,23 | 27 | 7,7 |

Le tableau 7 présente les résultats "Suntest" d'une lentille ophtalmique teintée et comprenant un revêtement anti-UV selon l'invention.

Tableau 7

|  | Tv (%) | ∆Tv/Tv | ∆E |
|---|---|---|---|
| **0h** | 17,54 | 0 | 0,0 |

(suite)

|  | Tv (%) | ∆Tv/Tv | ∆E |
|---|---|---|---|
| **50h** | 17,76 | 1 | 0,3 |
| **100h** | 17,96 | 2 | 0,9 |
| **150h** | 18,40 | 5 | 1,5 |
| **200h** | 18,87 | 8 | 2,3 |

**Revendications**

1. Article optique comprenant dans cet ordre:

   - un substrat,
   - un premier revêtement comprenant au moins un colorant sensible à la photodégradation directement appliqué sur le substrat, et
   - un deuxième revêtement pour la protection contre la photodégradation (anti-UV) du premier revêtement comprenant au moins un colorant sensible à la photodégradation directement appliqué sur le premier revêtement,

   le revêtement pour la protection contre la photodégradation résultant de la photopolymérisation d'un mélange contenant :

   (i) un mélange d'oligomères acrylate et de monomères acrylate monofonctionnels ou multifonctionnels;
   (ii) de 5 % à 30 % en masse, rapporté au mélange de (i), (ii) et (iii), d'au moins un absorbeur UV, et
   (iii) de 3 % à 12 % en masse, rapporté au mélange de (i), (ii) et (iii), d'au moins un photoamorceur.

2. Article optique selon la revendication 1 **caractérisé en ce que** l'oligomère acrylate est choisi parmi un oligomère époxy acrylate aliphatique, un oligomère époxy acrylate aromatique, un oligomère uréthane acrylate aliphatique, un oligomère uréthane acrylate aromatique, et un oligomère polyester acrylate.

3. Article optique selon l'une quelconque des revendications 1 ou 2 **caractérisé en ce que** la masse molaire moyenne en nombre ($M_n$) de l'oligomère acrylate est comprise entre 500 g/mol et 10 000 g/mol.

4. Article optique selon l'une des revendications précédentes **caractérisé en ce que** l'oligomère acrylate est un uréthane acrylate aliphatique difonctionnel.

5. Article optique selon la revendication 4 **caractérisé en ce que** l'oligomère acrylate présente une masse molaire moyenne en nombre $M_n$ de 2200 g/mol.

6. Article optique selon la revendication 1 **caractérisé en ce que** le monomère acrylate est un monomère monofonctionnel choisi parmi isobornyl acrylate, tétra hydrofurfuryl acrylate, lauryl acrylate, 2-phénoxyéthyl acrylate, ou un monomère difonctionnel choisi parmi 1,6-hexanediol diacrylate, tricyclodécanediméthanol diacrylate, diéthylène glycol diacrylate, polyéthylène glycol diacrylates, tétraéthylène glycol diacrylate, triéthylène glycol diacrylate, tripropylène glycol diacrylate, polyéthylène glycol diacrylate, bisphénol-A éthoxylé diacrylate, dipropylène glycol diacrylate, hexanediol alkoxylé diacrylate, esterdiol diacrylate, polypropylène glycol diacrylate, et néopentyl glycol propoxyl diacrylate.

7. Article optique selon l'une des revendications précédentes **caractérisé en ce que** le revêtement pour la protection contre la photodégradation résulte de la photopolymérisation d'un mélange contenant un mélange d'oligomère acrylate et de monomère acrylate monofonctionnel.

8. Article optique selon la revendication 7 **caractérisé en ce que** le monomère acrylate est l'isobornyl acrylate.

9. Article optique selon la revendication 1 **caractérisé en ce que** le monomère acrylate est un monomère multifonctionnel choisi parmi les triméthylolpropane ethoxylé triacrylate, pentaérythritol tétraacrylate, triméthylolpropane triacrylate, ditriméthylolpropane tétraacrylate, tris(2-hydroxyéthyl)isocyanurate triacrylate, dipentaérythritol pentaacrylate, pentaérythritol triacrylate, trimethylolpropane propoxylé-3 triacrylate, pentaérythritol éthoxyle-4 tetraacrylate, pentaérythritol ethoxylé-5 triacrylate, pentaérythritol ethoxylé-5 tétraacylate et glycerol propoxylé triacrylate.

10. Article optique selon la revendication 9, **caractérisé en ce que** le monomère acrylate multifonctionnel est choisi parmi le pentaérythritol triacrylate, le tris(2-hydroxyéthyl)isocyanurate triacrylate et le dipentaéryhtritol pentaacrylate.

11. Article optique selon l'une des revendications précédentes, **caractérisé en ce que** le revêtement pour la protection contre la photodégradation résulte de la photopolymérisation d'un mélange contenant un mélange d'au moins deux monomères monofonctionnels et/ou difonctionnels.

12. Article optique selon l'une des revendications précédentes **caractérisé en ce que** le monomère acrylate est un oligomère uréthane acrylate et **en ce que** le rapport en poids monomère(s) acrylate/oligomère uréthane acrylate est compris entre 0,5 et 6.

13. Article optique selon la revendication 12 **caractérisée en ce que** le rapport en poids monomère (s) acrylate/oligomère uréthane acrylate est compris entre 2 et 5.

14. Article optique selon l'une des revendications précédentes, **caractérisé en ce que** le revêtement pour la protection contre la photodégradation résulte de la photopolymérisation d'un mélange contenant un oligomère uréthane acrylate aliphatique difonctionnel et un monomère acrylate multifonctionnel choisi parmi le pentaérythritol triacrylate, le tris(2-hydroxyéthyl)isocyanurate triacrylate, le tricyclodécanediméthanol diacrylate et le dipentaérythritol pentaacrylate .

15. Article optique selon la revendication 14 **caractérisé en ce que** le rapport en masse monomère acrylate multifonctionnel/oligomère uréthane acrylate aliphatique est compris entre 0,2 et 5.

16. Article optique selon l'une des revendications précédentes **caractérisé en ce que** le revêtement pour la protection contre la photodégradation résulte de la photopolymérisation d'un mélange contenant un mélange d'oligomère acrylate, de monomère(s) acrylate monofonctionnel(s) et de monomère(s) acrylate multifonctionnel(s), le rapport en poids monomère(s) acrylate/oligomère acrylate étant compris entre 0,2 et 6, et la proportion monomère(s) monofonctionnel(s)/monomère(s) multifonctionnel(s) est supérieure à 50%.

17. Article optique selon l'une des revendications précédentes **caractérisé en ce que** l'absorbeur UV est choisi parmi les benzotriazoles, en particulier l'hydroxyphénylbenzotriazole, la hydroxyphényl-S-triazine, les hydroxybenzophénones et les anilides oxaliques.

18. Article optique selon la revendication 17, **caractérisé en ce que** l'absorbeur UV est choisi parmi les absorbeurs UV de la famille des hydroxybenzophénones et des benzotriazoles.

19. Article optique selon la revendication 18, **caractérisé en ce que** l'absorbeur UV est choisi parmi la 2,2'-dihydroxy-4-méthoxybenzophenone et le 2-{[5-(2,2-diéthyl)butyl]-(2-hydroxy)phényl}-benzotriazole.

20. Article optique selon l'une quelconque des revendications précédentes, **caractérisé en ce que** le revêtement pour la protection contre la photodégradation comprend de 10% à 20% en masse d'absorbeur UV.

21. Article optique selon la revendication 21, **caractérisé en ce que** le revêtement pour la protection contre la photodégradation comprend de 12% à 18% en masse d'absorbeur UV.

22. Article optique selon l'une des revendications précédentes, **caractérisé en ce que** l'épaisseur du revêtement pour la protection contre la photodégradation est ajustée de façon à obtenir une coupure UV au moins égale à 360 nm et de préférence égale à 395 nm.

23. Article optique selon la revendication 22, **caractérisée en ce que** l'épaisseur du revêtement pour la protection contre la photodégradation est comprise entre 5 et 30 microns.

24. Article optique selon la revendication 23, **caractérisée en ce que** l'épaisseur du revêtement est comprise entre 15 et 22 microns.

25. Article optique selon l'une des revendications précédentes, **caractérisé en ce que** le photoamorceur est l'oxyde de bis-acylphosphine.

26. Article optique selon l'une quelconque des revendications précédentes, **caractérisé en ce que** le revêtement pour la protection contre la photodégradation comprend de 5% à 8% en masse de photoamorceur.

27. Article optique selon l'une quelconque des revendications précédentes, **caractérisé par le fait qu'**il s'agit d'une lentille ophtalmique et qu'il comprend en outre une couche barrière à l'oxygène choisie parmi une couche d'oxyde métallique dense, une couche d'oxyde métallique non dense et un système comprenant un empilement de 1 à 4 couches d'oxydes métalliques différents.

28. Article optique selon la revendication 27, **caractérisée en ce qu'**il s'agit d'une lentille ophtalmique polarisée, dans laquelle le revêtement comprenant au moins un colorant sensible à la photodégradation est un revêtement polarisant bicouches comprenant une première couche de photopolymères linéaires (LPP) et une seconde couche de cristaux liquides polymères (LCP) comprenant au moins un colorant dichroïque sensible à la photodégradation, et qui comprend en outre un revêtement anti-abrasion bicouches.

29. Procédé de fabrication d'un article optique selon l'une quelconque des revendications précédentes, en particulier d'une lentille ophtalmique, colorée et/ou polarisée, **caractérisé en ce qu'**il comprend les étapes suivantes:

- déposer sur un substrat nu ou sur un substrat revêtu d'au moins une couche de vernis, un revêtement comprenant au moins un colorant sensible à la photodégradation;
- réaliser optionnellement une préparation du substrat revêtu obtenu, préférentiellement une préparation de surface chimique,
- déposer par centrifugation un mélange contenant :

(i) un mélange d'oligomères acrylate et de monomères acrylate monofonctionnels ou multifonctionnels;
(ii) de 5 % à 30 % en masse, rapporté au mélange de (i), (ii) et (iii), d'au moins un absorbeur UV, et
(iii) de 3 % à 12 % en masse, rapporté au mélange de (i), (ii) et (iii), d'au moins un photoamorceur,

- photopolymériser ledit mélange de manière à former un revêtement de protection contre la photodégradation.

30. Procédé de fabrication d'un article optique selon la revendication 29, en particulier d'une lentille ophtalmique polarisée, **caractérisé en ce qu'**il comprend les étapes suivantes:

- déposer sur un substrat, de préférence un substrat organique, un revêtement polarisant bicouches comprenant une première couche de photopolymère linéaire (LPP) directement en contact avec la surface du substrat, et une seconde couche de polymère à cristaux liquides (LCP) comprenant au moins un colorant dichroïque sensible à la photodégradation, préférentiellement un mélange de colorants dichroïques, directement en contact avec ladite première couche;
- réaliser une préparation de surface du substrat comprenant le revêtement polarisant bicouches obtenu, en le trempant successivement dans un bain de soude à 5%, dans de l'eau et dans de l'isopropanol,
- déposer par centrifugation un mélange contenant :

(i) un mélange d'oligomères acrylate et de monomères acrylate monofonctionnels ou multifonctionnels;
(ii) de 5 % à 30 % en masse, rapporté au mélange de (i), (ii) et (iii), d'au moins un absorbeur UV, et
(iii) de 3 % à 12 % en masse, rapporté au mélange de (i), (ii) et (iii), d'au moins un photoamorceuret

- photopolymériser ledit mélange de manière à former un revêtement de protection contre la photodégradation.

31. Procédé selon la revendication 30, comprenant en outre l'étape suivante de déposer sur le revêtement de protection contre la photodégradation, un revêtement anti-abrasion bicouche comprenant :

- une première couche, directement en contact avec la surface du revêtement de protection contre la photodégradation, comprenant une dispersion aqueuse de polyuréthane;
- une seconde couche résistante à l'abrasion comprenant des hydrolysats d'aluminium et de silane.

32. Procédé selon l'une des revendications 30 ou 31 comprenant en outre l'étape suivante:

- déposer sur le revêtement de protection contre la photodégradation ou sur le revêtement anti-abrasion bicouche, une couche barrière à l'oxygène choisie parmi une couche d'oxyde métallique dense, une couche d'oxyde métallique non dense, et un système comprenant un empilement de 1 à 4 couches d'oxydes métalliques différents.

**Patentansprüche**

1. Optischer Gegenstand, der in dieser Reihenfolge Folgendes umfasst:

   - ein Substrat,
   - eine erste, mindestens einen für Lichtabbau empfindlichen Farbstoff enthaltende Beschichtung, die direkt auf das Substrat aufgebracht ist, und
   - eine zweite (UV-Schutz)Beschichtung zum Schutz der ersten, mindestens einen für Lichtabbau empfindlichen Farbstoff enthaltenden Beschichtung vor Lichtabbau, die direkt auf die erste Beschichtung aufgebracht ist,

   wobei die Beschichtung zum Schutz vor Lichtabbau aus der Photopolymerisation eines Gemischs resultiert, das Folgendes enthält:

   (i) ein Gemisch von Acrylatoligomeren und monofunktionellen oder multifunktionellen Acrylatmonomeren;
   (ii) 5 bis 30 Massen-%, bezogen auf das Gemisch von (i), (ii) und (iii), mindestens eines UV-Absorbers und
   (iii) 3 bis 12 Massen-%, bezogen auf das Gemisch von (i), (ii) und (iii), mindestens eines Photoinitiators.

2. Optischer Gegenstand nach Anspruch 1, **dadurch gekennzeichnet, dass** das Acrylatoligomer aus einem aliphatischen Epoxyacrylatoligomer, einem aromatischen Epoxyacrylatoligomer, einem aliphatischen Urethanacrylatoligomer, einem aromatischen Urethanacrylatoligomer und einem Polyesteracrylatoligomer ausgewählt ist.

3. Optischer Gegenstand nach einem der Ansprüche 1 oder 2, **dadurch gekennzeichnet, dass** die zahlenmittlere Molekülmasse ($M_n$) des Acrylatoligomers zwischen 500 g/mol und 10000 g/mol beträgt.

4. Optischer Gegenstand nach einem der vorhergehenden Ansprüche, **dadurch gekennzeichnet, dass** das Acrylatoligomer ein difunktionelles aliphatisches Urethanacrylat ist.

5. Optischer Gegenstand nach Anspruch 4, **dadurch gekennzeichnet, dass** das Acrylatoligomer eine zahlenmittlere Molekülmasse $M_n$ von 2200 g/mol aufweist.

6. Optischer Gegenstand nach Anspruch 1, **dadurch gekennzeichnet, dass** das Acrylatmonomer ein monofunktionelles Monomer, ausgewählt aus Isobornylacrylat, Tetrahydrofurfurylacrylat, Laurylacrylat, 2-Phenoxyethylacrylat, oder ein difunktionelles Monomer, ausgewählt aus 1,6-Hexandioldiacrylat, Tricyclodecandimethanoldiacrylat, Diethylenglykoldiacrylat, Polyethylenglykoldiacrylaten, Tetraethylenglykoldiacrylat, Triethylenglykoldiacrylat, Tripropylenglykoldiacrylat, Polyethylenglykoldiacrylat, ethoxyliertem Bisphenol-A-diacrylat, Dipropylenglykoldiacrylat, alkoxyliertem Hexandioldiacrylat, Esterdioldiacrylat, Polypropylenglykoldiacrylat und Neopentylglykolpropoxylatdiacrylat, ist.

7. Optischer Gegenstand nach einem der vorhergehenden Ansprüche, **dadurch gekennzeichnet, dass** die Beschichtung zum Schutz vor Lichtabbau aus der Photopolymerisation eines Gemischs resultiert, das ein Gemisch von Acrylatoligomer und monofunktionellem Acrylatmonomer enthält.

8. Optischer Gegenstand nach Anspruch 7, **dadurch gekennzeichnet, dass** das Acrylatmonomer Isobornylacrylat ist.

9. Optischer Gegenstand nach Anspruch 1, **dadurch gekennzeichnet, dass** das Acrylatmonomer ein multifunktionelles Monomer ist, das aus ethoxyliertem Trimethylolpropantriacrylat, Pentaerythrittetraacrylat, Trimethylolpropantriacrylat, Ditrimethylolpropantetraacrylat, Tris(2-hydroxyethyl)isocyanurattriacrylat, Dipentaerythritpentaacrylat, Pentaerythrittriacrylat, 3-propoxyliertem Trimethylolpropantriacrylat, 4-ethoxyliertem Pentaerythrittetraacrylat, 5-ethoxyliertem Pentaerythrittriacrylat, 5-ethoxyliertem Pentaerythrittetraacrylat und propoxyliertem Glycerintriacrylat ausgewählt ist.

10. Optischer Gegenstand nach Anspruch 9, **dadurch gekennzeichnet, dass** das multifunktionelle Acrylatmonomer aus Pentaerythrittriacrylat, Tris(2-hydroxyethyl)isocyanurattriacrylat und Dipentaerythritpentaacrylat ausgewählt ist.

11. Optischer Gegenstand nach einem der vorhergehenden Ansprüche, **dadurch gekennzeichnet, dass** die Beschichtung zum Schutz vor Lichtabbau aus der Photopolymerisation eines Gemischs resultiert, das ein Gemisch mindestens zweier monofunktioneller und/oder difunktioneller Monomere enthält.

12. Optischer Gegenstand nach einem der vorhergehenden Ansprüche, **dadurch gekennzeichnet, dass** das Acrylatmonomer ein Urethanacrylatoligomer ist, und dadurch, dass das Gewichtsverhältnis von Acrylatmonomer(en)/Urethanacrylatoligomer zwischen 0,5 und 6 beträgt.

13. Optischer Gegenstand nach Anspruch 12, **dadurch gekennzeichnet, dass** das Gewichtsverhältnis von Acrylatmonomer(en)/Urethanacrylatoligomer zwischen 2 und 5 beträgt.

14. Optischer Gegenstand nach einem der vorhergehenden Ansprüche, **dadurch gekennzeichnet, dass** die Beschichtung zum Schutz vor Lichtabbau aus der Photopolymerisation eines Gemischs resultiert, das ein difunktionelles aliphatisches Urethanacrylatoligomer und ein multifunktionelles Acrylatmonomer, das aus Pentaerythrittriacrylat, Tris(2-hydroxyethyl)isocyanurattriacrylat, Tricyclodecandimethanoldiacrylat und Dipentaerythritpentaacrylat ausgewählt ist, enthält.

15. Optischer Gegenstand nach Anspruch 14, **dadurch gekennzeichnet, dass** das Massenverhältnis von multifunktionellem Acrylatmonomer/aliphatischem Urethanacrylatoligomer zwischen 0,2 und 5 beträgt.

16. Optischer Gegenstand nach einem der vorhergehenden Ansprüche, **dadurch gekennzeichnet, dass** die Beschichtung zum Schutz vor Lichtabbau aus der Photopolymerisation eines Gemischs resultiert, das ein Gemisch von Acrylatoligomer, einem oder mehreren monofunktionellen Acrylatmonomer(en) und einem oder mehreren multifunktionellen Acrylatmonomer(en) enthält, wobei das Gewichtsverhältnis von Acrylatmonomer(en)/Acrylatoligomer zwischen 0,2 und 6 beträgt und der Anteil an monofunktionelle(m/n) Monomer(en)/multifunktionelle(m/n) Monomer(en) höher als 50% ist.

17. Optischer Gegenstand nach einem der vorhergehenden Ansprüche, **dadurch gekennzeichnet, dass** der UV-Absorber aus Benzotriazolen, insbesondere Hydroxyphenylbenzotriazol, Hydroxyphenyl-S-triazin, Hydroxybenzophenonen und Oxalaniliden ausgewählt ist.

18. Optischer Gegenstand nach Anspruch 17, **dadurch gekennzeichnet, dass** der UV-Absorber aus den UV-Absorbern der Familie der Hydroxybenzophenone und der Benzotriazole ausgewählt ist.

19. Optischer Gegenstand nach Anspruch 18, **dadurch gekennzeichnet, dass** der UV-Absorber aus 2,2'-Dihydroxy-4-methoxybenzophenon und 2-{[5-(2,2-Diethyl)butyl]-(2-hydroxy))phenyl}-benzotriazol ausgewählt ist.

20. Optischer Gegenstand nach einem der vorhergehenden Ansprüche, **dadurch gekennzeichnet, dass** die Beschichtung zum Schutz vor Lichtabbau 10 bis 20 Massen-% UV-Absorber umfasst.

21. Optischer Gegenstand nach Anspruch 21, **dadurch gekennzeichnet, dass** die Beschichtung zum Schutz vor Lichtabbau 12 bis 18 Massen-% UV-Absorber umfasst.

22. Optischer Gegenstand nach einem der vorhergehenden Ansprüche, **dadurch gekennzeichnet, dass** die Dicke der Beschichtung zum Schutz vor Lichtabbau so eingestellt ist, dass eine UV-Ausschlussgrenze von mindestens gleich 360 nm und vorzugsweise gleich 395 nm erhalten wird.

23. Optischer Gegenstand nach Anspruch 22, **dadurch gekennzeichnet, dass** die Dicke der Beschichtung zum Schutz vor Lichtabbau zwischen 5 und 30 Mikrometer beträgt.

24. Optischer Gegenstand nach Anspruch 23, **dadurch gekennzeichnet, dass** die Dicke der Beschichtung zwischen 15 und 22 Mikrometer beträgt.

25. Optischer Gegenstand nach einem der vorhergehenden Ansprüche, **dadurch gekennzeichnet, dass** der Photoinitiator Bisacylphosphinoxid ist.

26. Optischer Gegenstand nach einem der vorhergehenden Ansprüche, **dadurch gekennzeichnet, dass** die Beschichtung zum Schutz vor Lichtabbau 5 bis 8 Massen-% Photoinitiator enthält.

27. Optischer Gegenstand nach einem der vorhergehenden Ansprüche, **dadurch gekennzeichnet, dass** es sich um eine ophthalmische Linse handelt und dass er außerdem eine Sauerstoffsperrschicht umfasst, die aus einer dichten Metalloxidschicht, einer nicht-dichten Metalloxidschicht und einem System, das einen Stapel von 1 bis 4 Schichten verschiedener Metalloxide umfasst, ausgewählt ist.

28. Optischer Gegenstand nach Anspruch 27, **dadurch gekennzeichnet, dass** es sich um eine polarisierte ophthalmische Linse handelt, in der die Beschichtung, die mindestens einen für Lichtabbau empfindlichen Farbstoff umfasst, eine zweischichtige Polarisationsbeschichtung ist, die eine erste Schicht aus linearen Photopolymeren (LPP) und eine zweite Schicht aus flüssigkristallinen Polymeren (LCP) umfasst, die mindestens einen für Lichtabbau empfindlichen dichroitischen Farbstoff umfasst, und die außerdem eine zweischichtige Abriebschutzbeschichtung umfasst.

29. Verfahren zur Herstellung eines optischen Gegenstands nach einem der vorhergehenden Ansprüche, insbesondere einer gefärbten und/oder polarisierten ophthalmischen Linse, **dadurch gekennzeichnet, dass** es die folgenden Schritte umfasst:

   - Abscheiden, auf einem nackten Substrat oder auf einem mit mindestens einer Lackschicht beschichteten Substrat, einer Beschichtung, die mindestens einen für Lichtabbau empfindlichen Farbstoff umfasst;
   - gegebenenfalls Durchführen einer Vorbehandlung des erhaltenen beschichteten Substrats, vorzugsweise einer chemischen Oberflächenvorbehandlung,
   - Abscheiden mittels Zentrifugation eines Gemischs, das Folgendes enthält:

      (i) ein Gemisch von Acrylatoligomeren und monofunktionellen oder multifunktionellen Acrylatmonomeren;
      (ii) 5 bis 30 Massen-%, bezogen auf das Gemisch von (i), (ii) und (iii), mindestens eines UV-Absorbers und
      (iii) 3 bis 12 Massen-%, bezogen auf das Gemisch von (i), (ii) und (iii), mindestens eines Photoinitiators,

   - Photopolymerisieren des Gemischs, um eine Beschichtung zum Schutz vor Lichtabbau herzustellen.

30. Verfahren zur Herstellung eines optischen Gegenstands nach Anspruch 29, insbesondere einer polarisierten ophthalmischen Linse, **dadurch gekennzeichnet, dass** es die folgenden Schritte umfasst:

   - Abscheiden, auf einem Substrat, vorzugsweise einem organischen Substrat, einer zweischichtigen Polarisationsbeschichtung, die eine erste Schicht aus linearem Photopolymer (LPP) direkt in Kontakt mit der Oberfläche des Substrats und eine zweite Schicht aus flüssigkristallinem Polymer (LCP), die mindestens einen für Lichtabbau empfindlichen dichroitischen Farbstoff, vorzugsweise ein Gemisch von dichroitischen Farbstoffen, umfasst, direkt in Kontakt mit der ersten Schicht umfasst;
   - Durchführen einer Oberflächenvorbehandlung des Substrats, das die erhaltene zweischichtige Polarisationsbeschichtung umfasst, mittels aufeinanderfolgendem Eintauchen in ein 5% Soda-Bad, in Wasser und in Isopropanol,
   - Abscheiden mittels Zentrifugation eines Gemischs, das Folgendes enthält:

      (i) ein Gemisch von Acrylatoligomeren und monofunktionellen oder multifunktionellen Acrylatmonomeren;
      (ii) 5 bis 30 Massen-%, bezogen auf das Gemisch von (i), (ii) und (iii), mindestens eines UV-Absorbers und
      (iii) 3 bis 12 Massen-%, bezogen auf das Gemisch von (i), (ii) und (iii), mindestens eines Photoinitiators,

   - Photopolymerisieren des Gemischs, um eine Beschichtung zum Schutz vor Lichtabbau herzustellen.

31. Verfahren nach Anspruch 30, das außerdem den folgenden Schritt der Abscheidung auf der Beschichtung zum Schutz gegen Lichtabbau einer zweischichtigen Abriebschutzbeschichtung umfasst, die Folgendes umfasst:

   - eine erste Schicht direkt in Kontakt mit der Oberfläche der Beschichtung zum Schutz vor Lichtabbau, die eine wässrige Polyurethan-Dispersion umfasst;
   - eine zweite abriebfeste Schicht, die Aluminium- und Silanhydrolysate umfasst.

32. Verfahren nach einem der Ansprüche 30 oder 31, das außerdem den folgenden Schritt umfasst:

- Abscheiden auf der Beschichtung zum Schutz gegen Lichtabbau oder auf der zweischichtigen Abriebschutzbeschichtung einer Sauerstoffbarriereschicht, ausgewählt aus einer dichten Metalloxidschicht, einer nicht-dichten Metalloxidschicht, und einem System, das einen Stapel von 1 bis 4 Schichten verschiedener Metalloxide umfasst.

**Claims**

1. Optical article comprising, in this order:

   - a substrate;
   - a first coating comprising at least one photodegradation-sensitive dye directly applied to the substrate, and
   - a second photodegradation protection (anti-UV) coating for protecting the first coating comprising at least one photodegradation-sensitive dye directly applied to the first coating,

   the photodegradation protection coating resulting from the photopolymerization of a mixture containing:

   ( i) a mixture of monofunctional or multifunctional acrylate monomers and acrylate oligomers;
   ( ii) from 5% to 30% by weight, relative to the mixture of (i), (ii) and (iii), of at least one UV absorber, and
   ( iii) from 3% to 12% by weight, relative to the mixture of (i), (ii) and (iii), of at least one photoinitiator.

2. Optical article according to Claim 1, **characterized in that** the acrylate oligomer is chosen from an aliphatic epoxy acrylate oligomer, an aromatic epoxy acrylate oligomer, an aliphatic urethane acrylate oligomer, an aromatic urethane acrylate oligomer and a polyester acrylate oligomer.

3. Optical article according to either one of Claims 1 and 2, **characterized in that** the number-average molar mass ($M_n$) of the acrylate oligomer is between 500 g/mol and 10 000 g/mol.

4. Optical article according to one of the preceding claims, **characterized in that** the acrylate oligomer is a difunctional aliphatic urethane acrylate.

5. Optical article according to Claim 4, **characterized in that** the acrylate oligomer has a number-average molar mass $M_n$ of 2200 g/mol.

6. Optical article according to Claim 1, **characterized in that** the acrylate monomer is a monofunctional monomer chosen from isobornyl acrylate, tetrahydrofurfuryl acrylate, lauryl acrylate, 2-phenoxyethyl acrylate or a difunctional monomer chosen from 1,6-hexanediol diacrylate, tricyclodecanedimethanol diacrylate, diethylene glycol diacrylate, polyethylene glycol diacrylates, tetraethylene glycol diacrylate, triethylene glycol diacrylate, tripropylene glycol diacrylate, polyethylene glycol diacrylate, ethoxylated bisphenol-A diacrylate, dipropylene glycol diacrylate, alkoxylated hexanediol diacrylate, esterdiol diacrylate, polypropylene glycol diacrylate and propoxylated neopentyl glycol diacrylate.

7. Optical article according to one of the preceding claims, **characterized in that** the photodegradation protection coating results from the photopolymerization of a mixture containing a mixture of an acrylate oligomer and a monofunctional acrylate monomer.

8. Optical article according to Claim 7, **characterized in that** the acrylate monomer is isobornyl acrylate.

9. Optical article according to Claim 1, **characterized in that** the acrylate monomer is a multifunctional monomer chosen from ethoxylated trimethylolpropane triacrylate, pentaerythritol tetraacrylate, trimethylolpropane triacrylate, ditrimethylolpropane tetraacrylate, tris(2-hydroxyethyl)isocyanurate triacrylate, dipentaerythritol pentaacrylate, pentaerythritol triacrylate, 3-propoxylated trimethylolpropane triacrylate, 4-ethoxylated pentaerythritol tetraacrylate, 5-ethoxylated pentaerythritol triacrylate, 5-ethoxylated pentaerythritol tetraacrylate and propoxylated glycerol triacrylate.

10. Optical article according to Claim 9, **characterized in that** the multifunctional acrylate monomer is chosen from pentaerythritol triacrylate, tris(2-hydroxyethyl)isocyanurate triacrylate and dipentaerythritol pentaacrylate.

11. Optical article according to one of the preceding claims, **characterized in that** the photodegradation protection coating results from the photopolymerization of a mixture containing a mixture of at least two monofunctional and/or difunctional monomers.

12. Optical article according to one of the preceding claims, **characterized in that** the acrylate monomer is a urethane acrylate oligomer and **in that** the acrylate monomer(s)/urethane acrylate oligomer weight ratio is between 0.5 and 6.

13. Optical article according to Claim 12, **characterized in that** the acrylate monomer(s)/urethane acrylate oligomer weight ratio is between 2 and 5.

14. Optical article according to one of the preceding claims, **characterized in that** the photodegradation protection coating results from the photopolymerization of a mixture containing a difunctional aliphatic urethane acrylate oligomer and a multifunctional acrylate monomer which is chosen from pentaerythritol triacrylate, tris(2-hydroxyethyl)isocyanurate triacrylate, tricyclodecanedimethanol diacrylate and dipentaerythritol pentaacrylate.

15. Optical article according to Claim 14, **characterized in that** the multifunctional acrylate monomer/aliphatic urethane acrylate oligomer weight ratio is between 0.2 and 5.

16. Optical article according to one of the preceding claims, **characterized in that** the photodegradation protection coating results from the photopolymerization of a mixture containing a mixture of an acrylate oligomer, one or more monofunctional acrylate monomers and one or more multifunctional acrylate monomers, the acrylate monomer(s)/acrylate oligomer weight ratio being between 0.2 and 6, and the proportion of monofunctional monomer(s) to multifunctional monomer(s) is greater than 50%.

17. Optical article according to one of the preceding claims, **characterized in that** the UV absorber is chosen from benzotriazoles, in particular hydroxyphenylbenzo-triazole, hydroxyphenyl-S-triazine, hydroxybenzophenones and oxalic anilides.

18. Optical article according to Claim 17, **characterized in that** the UV absorber is chosen from UV absorbers of the family of hydroxybenzophenones and benzotriazoles.

19. Optical article according to Claim 18, **characterized in that** the UV absorber is chosen from 2,2'-dihydroxy-4-methoxybenzophenone and 2-{[5-(2,2-diethyl)butyl]-(2-hydroxy)phenyl}benzotriazole.

20. Optical article according to one of the preceding claims, **characterized in that** the photodegradation protection coating comprises from 10% to 20% by weight of UV absorber.

21. Optical article according to Claim 21, **characterized in that** the photodegradation protection coating comprises from 12% to 18% by weight of UV absorber.

22. Optical article according to one of the preceding claims, **characterized in that** the thickness of the photodegradation protection coating is adjusted so as to obtain a UV cutoff at least equal to 360 nm and preferably equal to 395 nm.

23. Optical article according to Claim 22, **characterized in that** the thickness of the photodegradation protection coating is between 5 and 30 microns.

24. Optical article according to Claim 23, **characterized in that** the thickness of the coating is between 15 and 22 microns.

25. Optical article according to one of the preceding claims, **characterized in that** the photoinitiator is bisacylphosphine oxide.

26. Optical article according to any one of the preceding claims, **characterized in that** the photodegradation protection coating comprises from 5% to 8% by weight of photoinitiator.

27. Optical article according to any one of the preceding claims, **characterized in that** it is an ophthalmic lens and that it additionally comprises an oxygen barrier layer chosen from a dense metal oxide layer, a non-dense metal oxide layer and a system comprising a stack of 1 to 4 layers of different metal oxides.

28. Optical article according to Claim 27, **characterized in that** it is a polarized ophthalmic lens, wherein the coating comprising at least one photodegradation-sensitive dye is a bilayer polarizing coating comprising a linear photopolymer (LPP) first layer and a liquid-crystal polymer (LCP) second layer comprising at least one photodegradation-sensitive dichroic dye, and which additionally comprises a bilayer abrasion-resistant coating.

29. Process for manufacturing an optical article according to any one of the preceding claims, in particular a tinted and/or polarized ophthalmic lens, **characterized in that** it comprises the following steps:

- depositing a coating comprising at least one photodegradation-sensitive dye on a bare substrate or on a substrate coated with at least one layer of varnish;
- optionally carrying out a preparation of the coated substrate obtained, preferably a chemical surface preparation;
- depositing, by spin coating, a mixture containing:

(i) a mixture of monofunctional or multifunctional acrylate monomers and acrylate oligomers;
(ii) from 5% to 30% by weight, relative to the mixture of (i), (ii) and (iii), of at least one UV absorber, and
(iii) from 3% to 12% by weight, relative to the mixture of (i), (ii) and (iii), of at least one photoinitiator,

- photopolymerizing said mixture so as to form a photodegradation protection coating.

30. Process for manufacturing an optical article according to Claim 29, in particular a polarized ophthalmic lens, **characterized in that** it comprises the following steps:

- depositing on a substrate, preferably an organic substrate, a bilayer polarizing coating comprising a linear photopolymer (LPP) first layer directly in contact with the surface of the substrate, and a liquid-crystal polymer (LCP) second layer comprising at least one photodegradation-sensitive dichroic dye, preferably a mixture of dichroic dyes, directly in contact with said first layer;
- carrying out a surface preparation of the substrate comprising the bilayer polarizing coating obtained, by dipping it successively into a 5% sodium hydroxide bath, into water and into isopropanol,
- depositing, by spin coating, a mixture containing:

(i) a mixture of monofunctional or multifunctional acrylate monomers and acrylate oligomers;
(ii) from 5% to 30% by weight, relative to the mixture of (i), (ii) and (iii), of at least one UV absorber, and
(iii) from 3% to 12% by weight, relative to the mixture of (i), (ii) and (iii), of at least one photoinitiator, and

- photopolymerizing said mixture so as to form a photodegradation protection coating.

31. Process according to Claim 30, additionally comprising the following step of depositing, on the photodegradation protection coating, a bilayer abrasion-resistant coating comprising:

- a first layer, directly in contact with the surface of the photodegradation protection coating, comprising an aqueous polyurethane dispersion; and
- an abrasion-resistant second layer comprising aluminium hydrolysates and silane hydrolysates.

32. Process according to either of Claims 30 and 31, additionally comprising the following step:

- depositing, on the photodegradation protection coating or on the bilayer abrasion-resistant coating, an oxygen barrier layer chosen from a dense metal oxide layer, a non-dense metal oxide layer and a system comprising a stack of 1 to 4 layers of different metal oxides.

# Fig.1

# Fig.2

# Fig.3

**EP 1 785 747 B1**

## RÉFÉRENCES CITÉES DANS LA DESCRIPTION

**Documents brevets cités dans la description**

- US 5602661 A
- US 20050151926 A
- EP 1593990 A
- US 2003027960 A
- US 2005159514 A
- JP 6192651 A

- WO 9410230 A
- US 4211823 A
- US 5015523 A
- EP 614957 A
- US 5316791 A
- EP 0614957 A